# EUROPÄISCHE PATENTANMELDUNG

(11) **EP 2 065 844 A1**
(43) Veröffentlichungstag der Anmeldung: **03.06.2009**
(21) Anmeldenummer: 07450208.9
(22) Anmeldetag: 26.11.2007
(51) Int. Cl.: G06Q 10/00

(54) **Vorrichtung, Verfahren und Webserver zur Online-Reservierungsabfrage**

(71) Anmelder: Michael, Heinze, 5700 Zell am See (AT)
(72) Erfinder: Michael, Heinze, 5700 Zell am See (AT)
(74) Vertreter: Weiser, Andreas

(57) **Zusammenfassung**

Die Erfindung betrifft eine Vorrichtung (1) zur Online-Reservierungsabfrage von einzelnen Anteilen (2) eines Gegenstandes (3), insbesondere Zimmern eines Hotels, mit
einem Server (4), der ein 3D-Graphikmodell (11) des Gegenstandes (3) sowie die Reservierungsstände (17) der Anteile (2) des Gegenstandes (3) zur Abfrage bereitstellt, und
einem Clientcomputer (6) zur Anzeige des 3D-Graphikmodells (11) auf einem Benutzerbildschirm (19) unter wahlfrei veränderbarem Blickwinkel,

wobei der Server (4) auf entsprechende Abfrage(n) das 3D-Graphikmodell (11) des Gegenstandes (3) und/oder die Reservierungsstände (17) der Anteile (2) des Gegenstandes (3) an den Clientcomputer (6) sendet,
das 3D-Graphikmodell (11) des Gegenstandes (3) für jeden Anteil (2) ein diesem Anteil (2) im 3D-Graphikmodell (11) räumlich zugeordnetes Graphikobjekt (21 - 23) enthält,
und bei der blickwinkelabhängigen Anzeige des 3D-Graphikmodells (11) die Darstellungsart jedes Graphikobjekts (21 - 23) jeweils durch den Reservierungsstand (17) des Anteils (2), dem es zugeordnet ist, festgelegt ist.

Die Erfindung betrifft ferner Verfahren und Webserver hiefür.

## Beschreibung

Die vorliegende Erfindung betrifft eine Vorrichtung zur Online-Reservierungsabfrage von einzelnen Anteilen eines Gegenstandes, insbesondere Zimmern eines Hotels, mit einem Server, der ein 3D-Graphikmodell des Gegenstandes sowie die Reservierungsstände der Anteile des Gegenstandes zur Abfrage bereitstellt, und einem Clientcomputer zur Anzeige des 3D-Graphikmodells auf einem Benutzerbildschirm unter wahlfrei veränderbarem Blickwinkel, wobei der Server auf entsprechende Abfrage(n) das 3D-Graphikmodell des Gegenstandes und/oder die Reservierungsstände der Anteile des Gegenstandes an den Clientcomputer sendet. Die Erfindung betrifft ferner Verfahren und Webserver hiefür.

Online-Reservierungssysteme der genannten Art sind beispielsweise aus der JP 2004-29937 A bekannt und ermöglichen eine realitätsnahe "virtuelle Besichtigung" z.B. eines Hotels, seiner Zimmer oder der Umgebung des Hotels, indem 3D-Grafikmodelle des Hotels, der Zimmer, der Umgebung usw. auf dem Benutzerbildschirm unter interaktiv veränderbarem Blickwinkel dargestellt werden ("virtual reality"). Für die Reservierungsabfrage hinsichtlich einzelner Zimmer werden eigene Buchungssysteme verwendet, mit herkömmlichen textgebundenen Suchmasken und Listenausgaben der verfügbaren Zimmer. Dies macht den Abfrageprozeß zeitaufwendig für den Benutzer, und die dabei erhaltenen Informationen über Reservierungsverfügbarkeiten sind vom Benutzer selbst zu interpretieren und dann selbst den tatsächlichen örtlichen Gegebenheiten zuzuordnen.

Die Erfindung setzt sich zum Ziel, Vorrichtungen, Verfahren, Webserver und Programmlogiken zu schaffen, welche die geschilderten Nachteile überwinden und besonders einfache, rasche und leicht zu interpretierende Online-Reservierungsabfragen gestatten.

Dieses Ziel wird in einem ersten Aspekt mit einer Vorrichtung der einleitend genannten Art erreicht, die sich gemäß der Erfindung dadurch auszeichnet, daß das 3D-Graphikmodell des Gegenstandes für jeden Anteil ein diesem Anteil im 3D-Graphikmodell räumlich zugeordnetes Graphikobjekt enthält,
wobei bei der blickwinkelabhängigen Anzeige des 3D-Graphikmodells die Darstellungsart jedes Graphikobjekts jeweils durch den Reservierungsstand des Anteils, dem es zugeordnet ist, festgelegt ist.

Auf diese Weise werden erstmals die Reservierungsstände einzelner Anteile räumlich mit Objekten im 3D-Graphikmodell verknüpft, so daß die Reservierungsverfügbarkeiten für den Benutzer im interaktiv manipulierbaren 3D-Graphikmodell selbst sofort ersichtlich sind. Dadurch kann der Benutzer die räumliche Lage von reservierbaren Anteilen, z.B. Zimmern, unmittelbar in der virtuellen Realität des 3D-Graphikmodells erkennen, ohne daß er die räumliche Zuordnung selbst treffen müßte. Das System der Erfindung ermöglicht damit eine wesentlich einfachere, raschere, leichter verständliche und intuitivere Onlineabfrage von Reservierungsverfügbarkeiten als alle bisher bekannten Systeme.

In einer ersten bevorzugten Variante der Erfindung repräsentiert das dem Anteil zugeordnete Graphikobjekt selbst diesen Anteil im 3D-Graphikmodell. Dies minimiert die Anzahl von Objekten im 3D-Graphikmodell, welche vom Clientcomputer interpretiert werden müssen. Alternativ kann das dem Anteil zugeordnete Graphikobjekt einer Graphikrepräsentation dieses Anteils im 3D-Graphikmodell räumlich unmittelbar benachbart sein. Dies erübrigt eine Modularisierung des 3D-Graphikmodells in einzelne Graphikrepräsentationen für jeden Anteil; die den Anteilen zugeordneten Graphikobjekte können überdies schlichter gestaltet werden als die Graphikrepräsentationen der Anteile selbst.

Bevorzugt ist die genannte reservierungsstandsabhängige Darstellungsart die Sichtbarkeit, Transparenz oder Farbe des Graphikobjekts. Farbe oder Transparenz ("Transparenzgrad") als Darstellungsart eignet sich insbesondere für solche Graphikobjekte, welche selbst den jeweiligen Anteil im 3D-Graphikmodell repräsentieren. Sichtbarkeit ("sichtbar" oder "unsichtbar") eignet sich besonders für Graphikobjekte, welche der Graphikrepräsentation eines Anteils benachbart sind, ohne diesen vollständig zu überdecken, z.B. für "floating tags". Sichtbarkeit oder Transparenz als Darstellungsart eignet sich wiederum besonders für solche Graphikobjekte, welche der Graphikrepräsentation eines Anteils eng benachbart sind und diesen ganz verdecken oder sogar umhüllen.

Gemäß einem weiteren bevorzugten Merkmal der Erfindung wird vorgesehen, daß die genannte Darstellungsart zusätzlich mauszeigersensitiv ist. Dadurch ändert sich die Darstellungsart des Graphikobjekts beim Darüberbewegen des Mauszeigers ("mouse over"), wodurch die jeweils aktuelle Benutzerauswahl eines Graphikobjekts auch optisch angezeigt werden kann.

In jedem Fall ist es besonders günstig, wenn gemäß einem weiteren Merkmal der Erfindung die Reservierungsstände von bestimmten Attributen der Anteile abhängig und hinsichtlich bestimmter Attribute abfragbar sind. Solche Attribute können beispielsweise Bettenanzahl, Ausstattungen wie Bad/Dusche, Meerblick, Halbpension usw. sein, nach denen die Reservierungsstände bei der Abfrage gefiltert werden können.

An dieser Stelle sei erwähnt, daß der hier verwendete Begriff "Reservierungsstand" jede beliebige Art von Verfügbarkeitsinformation über einen Anteil umfaßt, sei es eine einfache boolsche Information wie "vorrätig/nicht vorrätig", "verfügbar/nicht verfügbar", "frei/belegt", oder zusätzlich qualitative und/oder quantitative Angaben wie "Sonderangebot", bestimmte Reservierungsbedingungen (z.B. "buchbar nur bis...", "buchbar nur für...") usw.

Besonders günstig ist es, wenn gemäß einem weiteren bevorzugten Merkmal der Erfindung die Reservierungsstände in Zeiteinheiten unterteilt und hinsichtlich bestimmter Zeitfenster von Zeiteinheiten abfragbar sind. Dies ermöglicht zusätzlich zu der räumlich-interaktiven Reservierungsabfrage auch eine zeitlich-interaktive Reservierungsabfrage: Das Zeitfenster kann beispielsweise mittels eines Gleitschieber-, Drehwähler- oder Kalender-Objekts usw. auf dem Benutzerbildschirm interaktiv eingestellt werden, und das 3D-Graphikmodell wird abhängig vom eingestellten Zeitfenster und der entsprechenden Reservierungsabfrage aktualisiert. Der Blickwinkel auf das 3D-Graphikmodell mit den reservierungsstandsabhängigen Graphikobjekten bleibt weiterhin interaktiv frei wählbar, so daß sich gleichsam ein räumlicher-zeitlicher ("4-dimensionaler") Einblick in den Reservierungsstand der Anteile eines Gegenstandes, z.B. der Zimmerbelegung eines Hotels, ergibt.

Eine weitere bevorzugte Variante der Erfindung besteht darin, daß das auf dem Benutzerbildschirm angezeigte Graphikobjekt mauszeigersensitiv ist, um einen Reservierungsvorgang auszulösen. Beispielsweise kann das Graphikobjekt, welches einem reservierbaren Anteil zugeordnet ist, angeklickt werden, um dadurch einen herkömmlichen Online-Reservierungs- bzw. Buchungsvorgang anzustoßen.

In einem zweiten Aspekt der Erfindung wird ein Verfahren zur Online-Reservierungsabfrage von einzelnen Anteilen eines Gegenstandes, insbesondere Zimmern eines Hotels, geschaffen, mit den Schritten:
Zurverfügungstellen eines 3D-Graphikmodells des Gegenstandes, welches auf einem Benutzerbildschirm unter wahlfrei veränderbarem Blickwinkel anzeigbar ist und für jeden Anteil ein diesem Anteil im 3D-Graphikmodell räumlich zugeordnetes Graphikobjekt enthält, auf einem Server,
Zurverfügungstellen der Reservierungsstände der Anteile auf dem Server,
Übertragen des 3D-Graphikmodells und der Reservierungsstände, auf entsprechende Abfrage(n), vom Server zu einem Clientcomputer,
Festlegen der Darstellungsart jedes Graphikobjekts entsprechend dem Reservierungsstand des Anteils, dem es zugeordnet ist, im Clientcomputer, und
Anzeigen des 3D-Graphikmodells auf dem Benutzerbildschirm des Clientcomputers unter wahlfrei veränderbarem Blickwinkel.

Alternativ wird ein Verfahren zur Online-Reservierungsabfrage von einzelnen Anteilen eines Gegenstandes, insbesondere Zimmern eines Hotels, geschaffen, mit den Schritten:
Zurverfügungstellen eines 3D-Graphikmodells des Gegenstandes, welches auf einem Benutzerbildschirm unter wahlfrei veränderbarem Blickwinkel anzeigbar ist und für jeden Anteil ein diesem Anteil im 3D-Graphikmodell räumlich zugeordnetes Graphikobjekt enthält, auf einem Server,
Zurverfügungstellen der Reservierungsstände der Anteile auf dem Server,
Festlegen der Darstellungsart jedes Graphikobjekts entsprechend dem Reservierungsstand des Anteils, dem es zugeordnet ist, im Server,
Übertragen des 3D-Graphikmodells mit den reservierungsstandsabhängig festgelegten Graphikobjekten vom Server zu einem Clientcomputer, und
Anzeigen des 3D-Graphikmodells auf dem Benutzerbildschirm des Clientcomputers unter wahlfrei veränderbarem Blickwinkel.

Beide Verfahrensvarianten führen zu den oben bereits hinsichtlich der Vorrichtung geschilderten Vorteilen, wobei die erste Variante den speziellen Vorteil eines geringeren Netzwerkverkehrs und die zweite Variante den speziellen Vorteil geringerer Rechenoperationen am Clientcomputer hat.

Hinsichtlich bevorzugter Varianten der erfindungsgemäßen Verfahren wird in analoger Weise auf die vorstehend erörterten Varianten der Vorrichtung und ihre Vorteile verwiesen.

In einem dritten Aspekt schafft die Erfindung einen Webserver zur Online-Reservierungsabfrage von einzelnen Anteilen eines Gegenstandes, insbesondere Zimmern eines Hotels,
wobei der Webserver ein 3D-Graphikmodell des Gegenstandes, welches zur Anzeige auf einem Benutzerbildschirm unter wahlfrei veränderbarem Blickwinkel dient, sowie die Reservierungsstände der Anteile des Gegenstandes zur Abfrage bereitstellt und sich dadurch auszeichnet, daß das 3D-Graphikmodell des Gegenstandes für jeden Anteil ein diesem Anteil im 3D-Graphikmodell räumlich zugeordnetes Graphikobjekt enthält,
wobei die Darstellungsart jedes Graphikobjekts im 3D-Graphikmodell jeweils durch den Reservierungsstand des Anteils, dem es zugeordnet ist, festgelegt ist.

Die Erfindung wird nachstehend anhand von in den beigeschlossenen Zeichnungen dargestellten Ausführungsbeispielen näher erläutert. In den Zeichnungen zeigt

Fig. 1 die Vorrichtung und den Webserver der Erfindung schematisch in Blockschaltbildform;

Fig. 2 ein Beispiel eines Gegenstandes mit einzelnen reservierbaren Anteilen, hier ein Hotel mit Zimmern, in einer Perspektivansicht;

Fig. 3 den Aufbau der Reservierungsstandsdatenbank des Webservers von Fig. 1;

Fig. 4 den Aufbau eines beispielhaften 3D-Graphikmodells aus der Graphikmodelldatenbank des Webservers von Fig. 1 mit drei verschiedenen Varianten von Graphikobjekten, welche einzelnen Anteilen des Gegenstandes von Fig. 2 räumlich zugeordnet sind, in einer perspektivischen Explosionsdarstellung; und

die Fig. 5 bis 7 beispielhafte Bildschirmanzeigen auf dem Benutzerbildschirm eines Clientcomputers in verschiedenen Ausführungsstadien des erfindungsgemäßen Verfahrens.

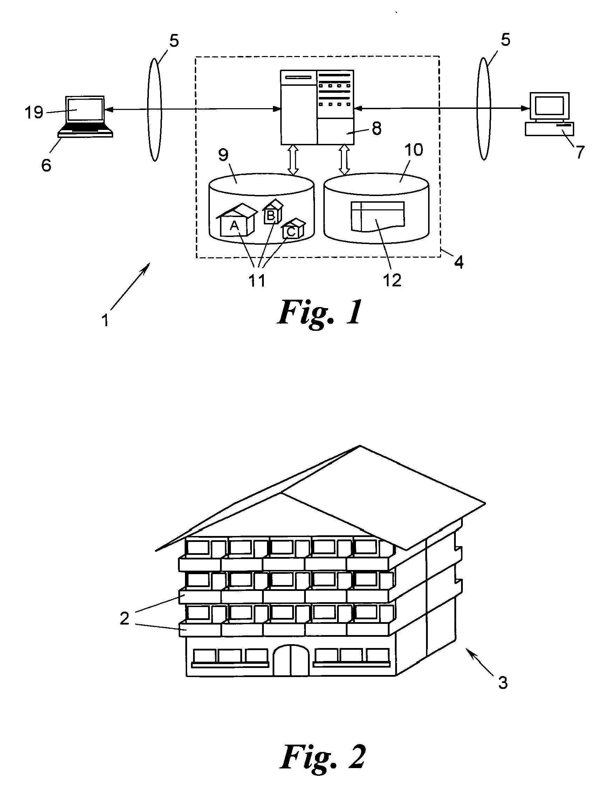

Die in Fig. 1 gezeigte Vorrichtung 1 dient zur Online-Reservierungsabfrage von einzelnen Anteilen 2 eines Gegenstandes 3, wie er in Fig. 2 beispielhaft in Form eines Hotels gezeigt ist, dessen Zimmer die Anteile 2 bilden.

Die Vorrichtung 1 umfaßt einen Server, bevorzugt Webserver 4, der über ein Datennetz, bevorzugt das Internet 5, mit Clientcomputern 6 (nur einer stellvertretend gezeigt) und Hotelierterminals 7 (nur eines stellvertretend gezeigt) in Verbindung steht. Der Webserver 4 umfaßt seinerseits einen Computer 8 und zwei daran angeschlossene Datenbanken 9, 10, die gegebenenfalls auch geographisch entfernt vom Computer 8 aufgestellt sein können, beispielsweise über das Internet 5 angeschlossen.

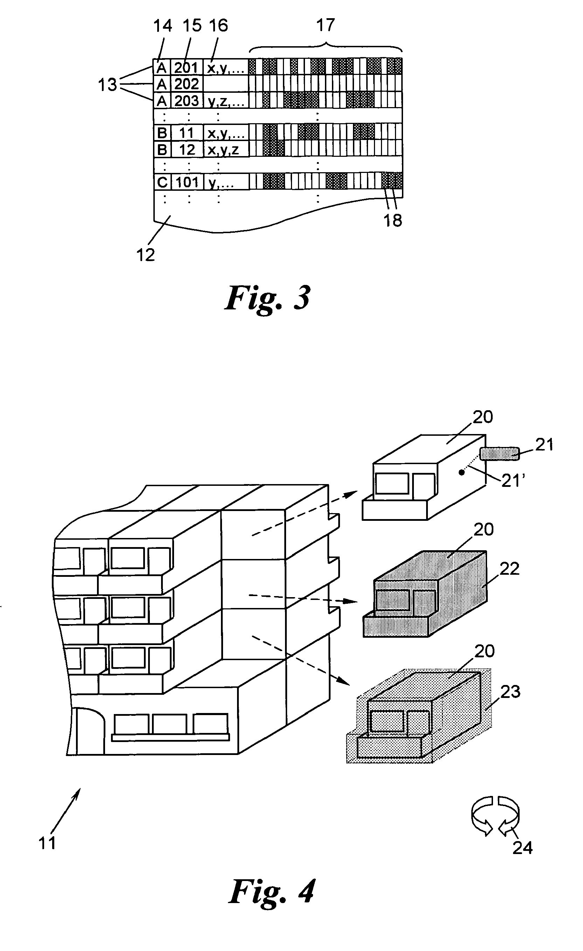

Die erste Datenbank 9 enthält 3D-Graphikmodelle 11 von Gegenständen 3, welche anhand der Fig. 4 bis 7 noch ausführlicher erörtert werden. Die zweite Datenbank 10 enthält die Reservierungsstände der Anteile 2 der Gegenstände 3, z.B. in Form einer Liste 12, deren Aufbau in Fig. 3 ausführlicher gezeigt ist.

Gemäß Fig. 3 enthält die Liste 12 für jeden Anteil 2 eines Gegenstandes 3 einen Eintrag 13, der aufweist: eine Kennung 14 des Gegenstandes 3, eine Kennung 15 des Anteils 2, eine Liste 16 mit Attributen, welche bestimmte Eigenschaften des Anteils 2 kennzeichnen, wie Größe, Belegbarkeit, damit verbundene Dienstleistungen usw., und einen Reservierungsstand 17 des Anteils 2 hinsichtlich einzelner Zeiteinheiten 18.

Der Reservierungsstand 17 des Anteils 2 in einer Zeiteinheit 18 kann nicht nur eine einfache boolsche Information enthalten (z.B. frei/belegt), sondern auch qualitative und/oder quantitative Zusatzinformationen, z.B. über Sonderangebote, bestimmte Reservierungsbedingungen ("nur buchbar in Verbindung mit...", "nur buchbar für...", "nur buchbar wenn..." usw.). Alle diese Informationen werden hier unter dem allgemeinen Begriff "Reservierungsstand" zusammengefaßt.

Die Reservierungsstände 17 der Anteile 2 der Gegenstände 3 werden von Hoteliers an den Hotelierterminals 7 oder von automatischen Reservierungs- oder Buchungssystemen in die Verfügbarkeitsdatenbank 10 eingepflegt.

Die Reservierungsstände 17 können von den Benutzern an den Clientcomputern 6 in herkömmlichen Art und Weise, z.B. mittels entsprechender Suchmasken und üblicher Client/Server-Abfragetechniken, abgefragt und auf dem Benutzerbildschirm 19 in herkömmlicher Text- oder Tabellenform ausgegeben werden.

Zusätzlich zu diesen bekannten Abfragemöglichkeiten der Verfügbarkeitsdatenbank 10 wird für einen Benutzer am Clientcomputer 6 auch eine räumlich und zeitlich dynamische 3D-Visualisierung der Reservierungsstände 17 der Anteile 2 eines bestimmten Gegenstandes 3 erzeugt, und zwar durch Verknüpfung der Informationen aus der Verfügbarkeitsdatenbank 10 mit jenen aus der Graphikmodelldatenbank 9 in der folgenden Art und Weise.

Gemäß Fig. 4 enthält das Graphikmodell 11 des Gegenstandes 3 für jeden seiner Anteile 2 ein diesem Anteil im 3D-Graphikmodell 11 räumlich genau zugeordnetes Graphikobjekt. In Fig. 4 sind stellvertretend für die Graphikobjekte aller Anteile 2 drei verschiedene Ausführungsformen 21 - 23 von Graphikobjekten gezeigt. Die Graphikobjekte 21 - 23 sind zur besseren Übersicht von ihren mit strichlierten Pfeilen angedeuteten Orten im 3D-Graphikmodell 11 herausgelöst (Explosionsdarstellung).

Die Darstellungsart eines Graphikobjekts 21 - 23 bei der Anzeige des 3D-Graphikmodells 11 auf dem Benutzerbildschirm 19 wird durch den Reservierungsstand 17 jenes Anteiles 2, dem es zugeordnet ist, aus der Verfügbarkeitsdatenbank 10 gesteuert. Dies kann entweder durch den Computer 8 des Webservers 4 beim Versenden des 3D-Graphikmodells 11 an den Clientcomputer 6 erfolgen, oder durch den Clientcomputer 6 selbst, wenn er die Reservierungsstände 17 gesondert vom Webserver 4 erhält.

Die reservierungsstandabhängig gesteuerte Darstellungsart der Graphikobjekte 21 - 23 kann insbesondere ihre Sichtbarkeit, Transparenz oder Farbe sein, aber auch ihre Textur, Auflösung, Bewegung usw.

In einer ersten Ausführungsform 21 des Graphikobjekts ist dieses z.B. ein zwei- oder dreidimensionales, opakes oder semi-transparentes Beschriftungsobjekt und liegt im 3D-Graphikmodell 11 in unmittelbarer räumlicher Nachbarschaft zu einer Graphikrepräsentation 20 des Anteils 2, dem es zugeordnet ist. Das Graphikobjekt 21 ist z.B. ein "floating tag" und kann optional mit einer Bezugslinie 21' an der Graphikrepräsentation 20 "angehängt" sein. Bei einer Veränderung des Blickwinkels auf das 3D-Graphikmodell 11 auf dem Benutzerbildschirm 19, z.B. einer Rotation in Richtung der Pfeile 24, bewegt sich das Graphikobjekt 21 mit der Graphikrepräsentation 20 des Anteils 2 im 3D-Graphikmodell 11 entsprechend mit. Die Sichtbarkeit, Farbe und/oder ein Textinhalt des Graphikobjekts 21 geben dabei den Reservierungsstand 17 des Anteils 2, dem es zugeordnet ist, wieder.

In einer alternativen Ausführungsform 22 des Graphikobjekts entspricht das Graphikobjekt 22 der Graphikrepräsentation 20 des Anteils 2 selbst. Der Reservierungsstand 17 des Anteils 2 bestimmt hier z.B. die Farbe, Textur, Transparenz usw. des Graphikobjekts 22 bei der interaktiv rotierbaren Anzeige des 3D-Graphikmodells 11 auf dem Benutzerbildschirm 19.

In einer weiteren alternativen Ausführungsform 23 des Graphikobjekts ist dieses ein semi-transparentes Hüllobjekt, das die Graphikrepräsentation 20 des Anteils 2, dem es zugeordnet ist, räumlich umhüllt oder zumindest teilweise verdeckt und dadurch eine entsprechende Färbänderung der Graphikrepräsentation 20 bewirkt. Der Reservierungsstand 17 des Anteils 2 bestimmt hier z.B. den Transparenzgrad des Graphikobjekts 23 oder seine Sichtbarkeit, d.h. ob es angezeigt wird oder nicht.

Die Ausführungsformen 21 und 23 der Graphikobjekte erfordern nicht, daß die Graphikrepräsentation 20 des Anteils 2 tatsächlich als eigenes Objekt im 3D-Graphikmodell 11 vorliegt; beispielsweise kann der gesamte Gegenstand 3 in einem einzigen Objekt des 3D-Graphikmodells 11 modelliert sein, denn die Graphikobjekte 21 und 23 benötigen nur eine räumliche Zuordnung zum Ort des jeweiligen Anteils 2 im 3D-Graphikmodell 11. Die Ausführungsform 22 des Graphikobjekts setzt eine Modularisierung des 3D-Graphikmodells 11 in einzelne Graphikrepräsentationen 20 für jeden Anteil 2 voraus.

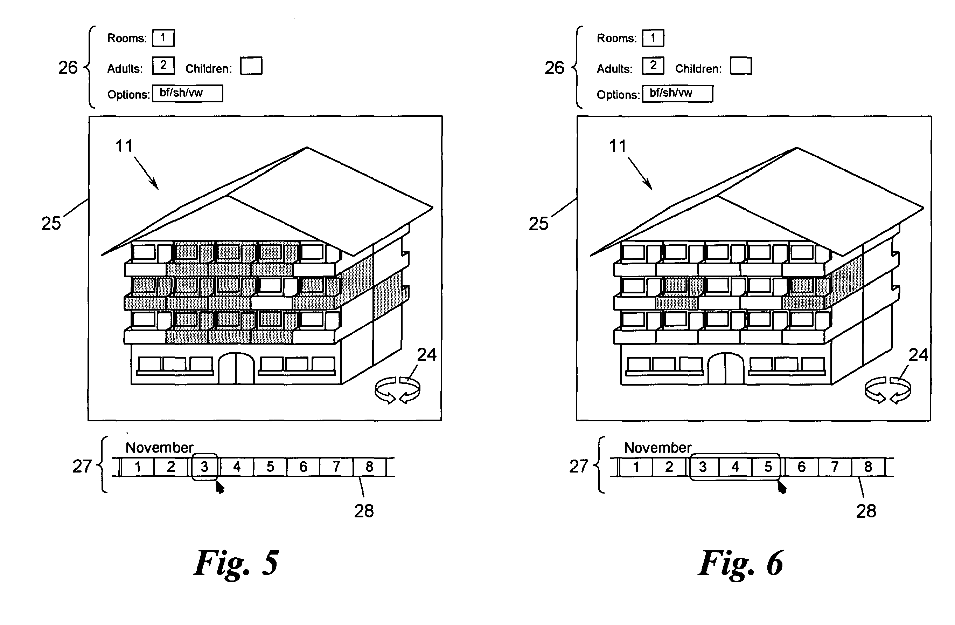

Die Fig. 5 bis 7 zeigen die Funktionsweise der Vorrichtung 1 und den Ablauf des Verfahrens der Erfindung jeweils anhand einer beispielhaften Bildschirmanzeige auf dem Benutzerbildschirm 19 des Clientcomputers 6, z.B. in Form einer vom Webserver 4 abgerufenen Internetseite. Ein dafür geeignetes Anzeigemodul, z.B. ein Browser-Applet, im Clientcomputer 6 zeigt das vom Webserver 4 erhaltene 3D-Graphikmodell 11 des Gegenstandes 3 in einem Anzeigebereich 25 des Benutzerbildschirms 19 unter einem wahlfrei veränderbaren Blickwinkel an, wie durch die Pfeile 24 versinnbildlicht, d.h. der Benutzer kann z.B. durch entsprechende Mausbewegungen oder Tastaturbefehle den Blickwinkel dynamisch verändern, z.B. das 3D-Graphikmodell 11 rotieren und von allen Seiten betrachten.

In einem Attributauswahlbereich 26 und einem Zeitfensterauswahlbereich 27 des Benutzerbildschirmes 19 kann der Benutzer bestimmte Suchkriterien und Zeitfenster zur Abfrage am Webserver 4 eingeben, welcher daraufhin die Reservierungsstände 17 der Anteile 2 des Gegenstandes 3, dessen 3D-Graphikmodell 11 gerade im Anzeigebereich 25 angezeigt wird, nach diesen Such- und Auswahlkriterien gefiltert an den Clientcomputer 6 zurückgibt, z.B. in Form von XML-Text als Teil einer HTTP-Antwort wie folgt:

```
     <AvailableRooms>
          <AvailableRoom>101</AvailableRoom>
          <AvailableRoom>102</AvailableRoom>
          <AvailableRoom>210</AvailableRoom>
     <AvailableRooms>
```

Der Clientcomputer 6 leitet die Antwort vom Webserver 4 an sein Anzeigemodul weiter, beispielsweise in Form entsprechender Funktionsaufrufe an das Java-Applet, welches das 3D-Graphikmodell 11 im Anzeigebereich 25 interaktiv rotierbar anzeigt, z.B. in der Form

```
     //Javascript code sample
     ActivateRoom("101");
     ActivateRoom("102");
     ActivateRoom("210");
```

Die Funktionsaufrufe bewirken eine Aktualisierung der Darstellungsart der Graphikobjekte 21 - 23 im 3D-Graphikmodell 11 entsprechend den jeweiligen Reservierungsständen 17. Im Ergebnis sind in dem angezeigten 3D-Graphikmodell 11 des Gegenstandes 3 dessen reservierbare Anteile 2 räumlich zugeordnet erkennbar, wobei das 3D-Graphikmodell 11 auf dem Benutzerbildschirm 19 völlig frei manipulierbar, z.B. drehbar, wendbar, zoombar usw., ist.

Die Abfragekriterien im Attributauswahlbereich 26 können beispielsweise Zimmeranzahl, Belegungswunsch (Anzahl der Erwachsenen, Anzahl der Kinder), gewünschte Eigenschaften wie z.B. Frühstück ("bf"), Dusche ("sh"), Aussicht ("vw") usw. sein. Optional könnte im Bereich 26 auch bereits eine Zeitfensterauswahl eingegeben werden, doch bevorzugt erfolgt diese in dem gesonderten Zeitfensterauswahlbereich 27.

Wie aus der Abfolge der Fig. 5 und 6 erkennbar, kann im Zeitfensterauswahlbereich 27, z.B. in Form eines Zeitlineals 28, ein bestimmtes Zeitfenster interaktiv ausgewählt werden. Die Anzeige des 3D-Graphikmodells 11 im Bereich 25 wird - durch entsprechende Abfragen der Verfügbarkeitsdatenbank 10 des Webservers 4 im Hintergrund - entsprechend der Auswahl auf dem Zeitlineal 28 automatisch aktualisiert. Dabei hat der Benutzer weiterhin alle räumlichen Möglichkeiten eines Rotierens, Drehens, Zoomens usw. des 3D-Graphikmodells 11 im Anzeigebereich 25, und das Zeitlineal 28 gestattet zusätzlich eine "Reise durch die Zeit" bei der Anzeige der reservierungsstandsabhängigen Graphikobjekte 21 - 23.

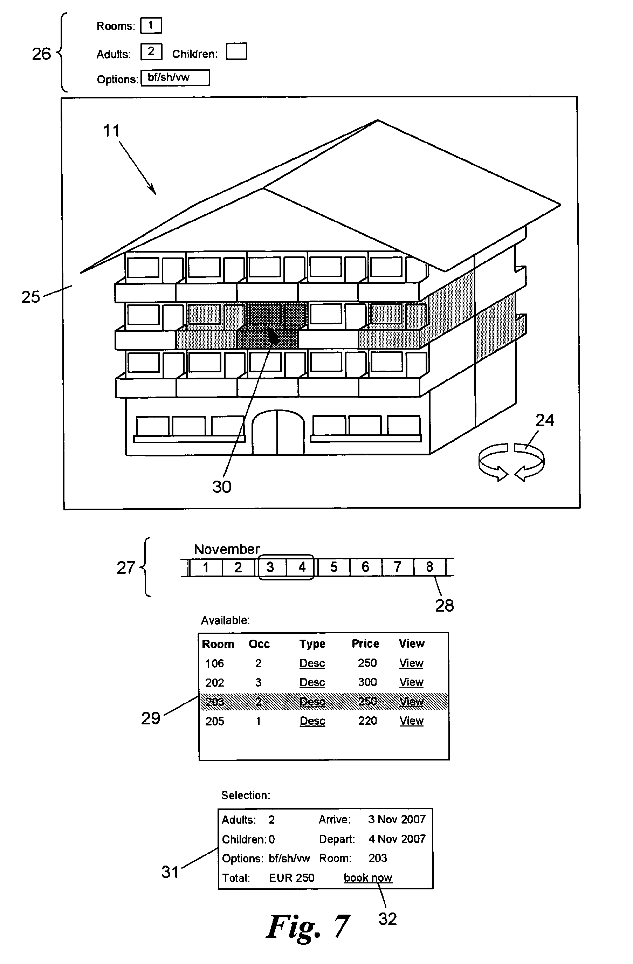

Wie Fig. 7 zeigt, kann für bestimmte Suchkriterien im Attributsauswahlbereich 26 und eine bestimmte Zeitfensterauswahl im Zeitfensterauswahlbereich 27 zusätzlich eine Text- oder Listenanzeige der reservierbaren Anteile 2, versehen mit Zusatzinformationen und Hyperlinks zu weiteren Webseiten, in einem Bereich 29 des Benutzerbildschirm 19 angezeigt werden.

Die Graphikobjekte 21 - 23 des 3D-Graphikmodells 11 können zusätzlich mauszeigersensitiv sein, d.h. ihre Darstellungsart kann sich beim Darüberbewegen eines Mauszeigers 30 verändern, wodurch ein bestimmtes Graphikobjekt 21 - 23 und damit ein bestimmter Anteil 2 ausgewählt werden können, wie in Fig. 7 gezeigt. Der ausgewählte Anteil 2 kann im Zusatzinformationsbereich 29 hervorgehoben werden und optional gleich in eine Buchungsmaske 31 auf dem Benutzerbildschirm 19 übertragen werden. Die Buchungsmaske 31 kann z.B. ein Hyperlink 32 zur Auslösung eines anschließenden, herkömmlichen Online-Buchungsvorganges darbieten, welcher letztlich zu einer Veränderung der Reservierungsstände 17 in der Liste 12 der Verfügbarkeitsdatenbank 10 führt, wie in der Technik bekannt.

Die in den Fig. 5 bis 7 gezeigten Bilderschirmanzeigen auf dem Benutzerbildschirm 19 können z.B. Internetbrowser-Darstellungen von HTML- oder XML-codierten Internetseiten sein, welche der Webserver 4 dynamisch aus seinen Datenbanken 9, 10 erzeugt und an den Clientcomputer 6 sendet. Das 3D-Graphikmodell 11 wird bevorzugt beim ersten Aufruf einer solchen Internetseite an den Clientcomputer 6 übertragen; anschließend werden zur Verringerung des Datenverkehrs nur mehr die entsprechenden Verfügbarkeitsabfragen vom Clientcomputer 6 an den Webserver 4 und die entsprechenden Reservierungsstände 17 vom Webserver 4 an den Clientcomputer 6 gesandt, wobei letzerer die Graphikobjekte 21 - 23 entsprechend modifiziert. Falls gewünscht, könnte jedoch in einer alternativen Ausführungsform das 3D-Graphikmodell 11 mit bereits vom Webserver 4 reservierungsstandsabhängig modifizierten Graphikobjekten 2 jedesmal neu als Antwort auf eine Abfrage an den Clientcomputer 6 gesendet werden.

Auch wenn in der vorliegenden Beschreibung eines konkreten Ausführungsbeispiels auf eine Reservierungsstandabfrage von Zimmern eines Hotels Bezug genommen wurde, versteht es sich, daß die hier beschriebene Erfindung für beliebige Arten von Anteilen 2 und Gegenständen 3 einsetzbar ist, z.B. Hotels mit ihren Räumlichkeiten oder Wellnessbereichen, Konferenzzentren mit ihren Tagungsräumen oder benutzbaren Einrichtungen, Spitäler mit ihren Patientenzimmern oder Betten, Kreuzfahrtschiffe mit ihren Kabinen, Züge mit ihren Abteilen, Ferienhausanlagen mit ihren Ferienhäusern, Stadien oder Theater mit ihren Sitzplätzen, Campingplätze mit ihren Abstellmöglichkeiten, Parkhäuser mit ihren Parkplätzen usw. Demgemäß ist die Erfindung nicht auf die dargestellten Ausführungsformen beschränkt sondern, umfaßt alle Varianten und Modifikationen, die in den Rahmen der angeschlossenen Ansprüche fallen.

## Patentansprüche

1. Vorrichtung (1) zur Online-Reservierungsabfrage von einzelnen Anteilen (2) eines Gegenstandes (3), insbesondere Zimmern eines Hotels, mit einem Server (4), der ein 3D-Graphikmodell (11) des Gegenstandes (3) sowie die Reservierungsstände (17) der Anteile (2) des Gegenstandes (3) zur Abfrage bereitstellt, und einem Clientcomputer (6) zur Anzeige des 3D-Graphikmodells (11) auf einem Benutzerbildschirm (19) unter wahlfrei veränderbarem Blickwinkel,
wobei der Server (4) auf entsprechende Abfrage(n) das 3D-Graphikmodell (11) des Gegenstandes (3) und/oder die Reservierungsstände (17) der Anteile (2) des Gegenstandes (3) an den Clientcomputer (6) sendet,
**dadurch gekennzeichnet, daß** das 3D-Graphikmodell (11) des Gegenstandes (3) für jeden Anteil (2) ein diesem Anteil (2) im 3D-Graphikmodell (11) räumlich zugeordnetes Graphikobjekt (21 - 23) enthält,
wobei bei der blickwinkelabhängigen Anzeige des 3D-Graphikmodells (11) die Darstellungsart jedes Graphikobjekts (21 - 23) jeweils durch den Reservierungsstand (17) des Anteils (2), dem es zugeordnet ist, festgelegt ist.

2. Vorrichtung nach Anspruch 1, **dadurch gekennzeichnet, daß** das dem Anteil (2) zugeordnete Graphikobjekt (21 - 23) diesen Anteil (2) im 3D-Graphikmodell (11) repräsentiert.

3. Vorrichtung nach Anspruch 1, **dadurch gekennzeichnet, daß** das dem Anteil (2) zugeordnete Graphikobjekt (21 - 23) einer Graphikrepräsentation (20) dieses Anteils (2) im 3D-Graphikmodell (11) räumlich unmittelbar benachbart ist.

4. Vorrichtung nach einem der Ansprüche 1 bis 3, **dadurch gekennzeichnet, daß** die genannte Darstellungsart die Sichtbarkeit, Transparenz oder Farbe des Graphikobjekts (21 - 23) ist.

5. Vorrichtung nach einem der Ansprüche 1 bis 4, **dadurch gekennzeichnet, daß** die genannte Darstellungsart zusätzlich mauszeigersensitiv ist.

6. Vorrichtung nach einem der Ansprüche 1 bis 5, **dadurch gekennzeichnet, daß** die Reservierungsstände (17) von bestimmten Attributen (16) der Anteile (2) abhängig und hinsichtlich bestimmter Attribute (16) abfragbar sind.

7. Vorrichtung nach einem der Ansprüche 1 bis 6, **dadurch gekennzeichnet, daß** die Reservierungsstände (17) in Zeiteinheiten (18) unterteilt und hinsichtlich bestimmter Zeitfenster von Zeiteinheiten (18) abfragbar sind.

8. Vorrichtung nach einem der Ansprüche 1 bis 7, **dadurch gekennzeichnet, daß** sich die Anzeige (25) des 3D-Graphikmodells (11) in Abhängigkeit von der Zeitfensterabfrage aktualisiert.

9. Vorrichtung nach einem der Ansprüche 1 bis 8, **dadurch gekennzeichnet, daß** das auf dem Benutzerbildschirm (19) angezeigte Graphikobjekt (21 - 23) mauszeigersensitiv ist, um einen Reservierungsvorgang auszulösen.

10. Verfahren zur Online-Reservierungsabfrage von einzelnen Anteilen (2) eines Gegenstandes (3), insbesondere Zimmern eines Hotels, **gekennzeichnet durch** die Schritte:
Zurverfügungstellen eines 3D-Graphikmodells (11) des Gegenstandes (3), welches auf einem Benutzerbildschirm (19) unter wahlfrei veränderbarem Blickwinkel anzeigbar ist und für jeden Anteil (2) ein diesem Anteil (2) im 3D-Graphikmodell (11) räumlich zugeordnetes Graphikobjekt (21 - 23) enthält, auf einem Server (4),
Zurverfügungstellen der Reservierungsstände (17) der Anteile (2) auf dem Server (4),
Übertragen des 3D-Graphikmodells (11) und der Reservierungsstände (17), auf entsprechende Abfrage(n), vom Server (4) zu einem Clientcomputer (6),
Festlegen der Darstellungsart jedes Graphikobjekts (21 - 23) entsprechend dem Reservierungsstand (17) des Anteils (2), dem es zugeordnet ist, im Clientcomputer (6), und
Anzeigen des 3D-Graphikmodells (11) auf dem Benutzerbildschirm (19) des Clientcomputers (6) unter wahlfrei veränderbarem Blickwinkel.

11. Verfahren zur Online-Reservierungsabfrage von einzelnen Anteilen (2) eines Gegenstandes (3), insbesondere Zimmern eines Hotels, **gekennzeichnet durch** die Schritte:
Zurverfügungstellen eines 3D-Graphikmodells (11) des Gegenstandes (3), welches auf einem Benutzerbildschirm (19) unter wahlfrei veränderbarem Blickwinkel anzeigbar ist und für jeden Anteil (2) ein diesem Anteil (2) im 3D-Graphikmodell (11) räumlich zugeordnetes Graphikobjekt (21 - 23) enthält, auf einem Server (4),
Zurverfügungstellen der Reservierungsstände (17) der Anteile (2) auf dem Server (4),
Festlegen der Darstellungsart jedes Graphikobjekts (21 - 23) entsprechend dem Reservierungsstand (17) des Anteils (2), dem es zugeordnet ist, im Server (4),
Übertragen des 3D-Graphikmodells (11) mit den reservierungsstandsabhängig festgelegten Graphikobjekten (21 - 23) vom Server (4) zu einem Clientcomputer (6), und
Anzeigen des 3D-Graphikmodells (11) auf dem Benutzerbildschirm (19) des Clientcomputers (6) unter wahlfrei veränderbarem Blickwinkel.

12. Verfahren nach Anspruch 10 oder 11, **dadurch gekennzeichnet, daß** das dem Anteil (2) zugeordnete Graphikobjekt (21 - 23) diesen Anteil (2) im 3D-Graphikmodell (11) repräsentiert.

13. Verfahren nach Anspruch 10 oder 11, **dadurch gekennzeichnet, daß** das dem Anteil (2) zugeordnete Graphikobjekt (21 - 23) einer Graphikrepräsentation (20) dieses Anteils (2) im 3D-Graphikmodell (11) räumlich unmittelbar benachbart ist.

14. Verfahren nach einem der Ansprüche 10 bis 13, **dadurch gekennzeichnet, daß** die genannte Darstellungsart die Sichtbarkeit, Transparenz oder Farbe des Graphikobjekts (21 - 23) ist.

15. Verfahren nach einem der Ansprüche 10 bis 14, **dadurch gekennzeichnet, daß** die genannte Darstellungsart zusätzlich mauszeigersensitiv ist.

16. Verfahren nach einem der Ansprüche 10 bis 15, **dadurch gekennzeichnet, daß** die Reservierungsstände (17) von bestimmten Attributen (16) der Anteile (2) abhängig und hinsichtlich bestimmter Attribute (16) abfragbar sind.

17. Verfahren nach einem der Ansprüche 10 bis 16, **dadurch gekennzeichnet, daß** die Reservierungsstände (17) in Zeiteinheiten (18) unterteilt und hinsichtlich bestimmter Zeitfenster von Zeiteinheiten (18) abfragbar sind.

18. Verfahren nach Anspruch 17, **dadurch gekennzeichnet, daß** die Anzeige (25) des 3D-Graphikmodells (11) in Abhängigkeit von der Zeitfensterabfrage aktualisiert wird.

19. Verfahren nach einem der Ansprüche 10 bis 18, **dadurch gekennzeichnet, daß** das auf dem Benutzerbildschirm (19) angezeigte Graphikobjekt (21 - 23) mauszeigersensitiv ist, um einen Reservierungsvorgang (17) auszulösen.

20. Webserver zur Online-Reservierungsabfrage von einzelnen Anteilen (2) eines Gegenstandes (3), insbesondere Zimmern eines Hotels,
wobei der Webserver (4) ein 3D-Graphikmodell (11) des Gegenstandes (3), welches zur Anzeige auf einem Benutzerbildschirm (19) unter wahlfrei veränderbarem Blickwinkel dient, sowie die Reservierungsstände (17) der Anteile (2) des Gegenstandes (3) zur Abfrage bereitstellt,
**dadurch gekennzeichnet, daß** das 3D-Graphikmodell (11) des Gegenstandes (3) für jeden Anteil (2) ein diesem Anteil (2) im 3D-Graphikmodell (11) räumlich zugeordnetes Graphikobjekt (21 - 23) enthält,
wobei die Darstellungsart jedes Graphikobjekts (21 - 23) im 3D-Graphikmodell (11) jeweils durch den Reservierungsstand (17) des Anteils (2), dem es zugeordnet ist, festgelegt ist.
